# EUROPEAN PATENT SPECIFICATION

(11) **EP 3 647 155 B1**
(45) Date of publication and mention of the grant of the patent: **08.06.2022**
(21) Application number: 19189505.1
(22) Date of filing: 01.08.2019
(51) Int. Cl.: B62B 3/10, B62B 3/12

(54) **FOLDABLE GOLF CART**
FALTBARER GOLFWAGEN
CHARIOT DE GOLF PLIABLE

(30) Priority: 15.10.2018 CN 201821670256 U
(43) Date of publication of application: 06.05.2020
(73) Proprietor: Ningbo Wentai Sport Equipment Co., Ltd., Zhejiang 315800 (CN)
(72) Inventor: Zhang, Sheng, Ningbo (CN)
(74) Representative: Huang, Liwei

(56) References cited:
- CA-A1- 2 708 205
- DE-A1-102016 120 455
- DE-U1-202011 002 811
- US-A1- 2013 062 865
- US-A1- 2013 234 418

## Description

### Technical Field

The invention relates to a golf cart, in particular to a foldable gold cart.

### Description of Related Art

Golf has been established for hundreds of years. As important tools for transporting golf equipment, golf carts have been widely used, wherein foldable golf carts which can be folded to reduce the storage size are becoming more and more popular.

Existing foldable golf carts typically comprise an upper frame, a lower frame, a handle set, a front wheel set, and two rear wheel sets, wherein the upper frame is mounted on the lower frame, the handle set is mounted on the upper portion of the upper frame, the front wheel set is mounted at the front end of the lower vehicle frame, and the two rear wheel sets are respectively mounted on the left side and the right side of the rear end of the lower frame. Due to the fact that multiple lock mechanisms have to be released when the handle set, the upper frame, and the lower frame are to be folded, the existing foldable golf carts are inconvenient to use.

US 2013/062865 A1 discloses a golf cart bag, comprising a lower frame including a connecting plate pivotally coupled to a rear wheel stand, a slide element installed at the top of the connecting plate, and an upper carrying base and a lower carrying base for placing and fixing a golf bag.

### Summary of the Invention

The technical issue to be settled by the invention is to provide a foldable golf cart which has a handle set, an upper frame and a lower frame easy to fold, and is convenient to use.

The present invention provides a foldable golf cart as described in claim 1 as well as some advantageous embodiments as described in the dependent claims.

The foldable golf cart comprises the features of claim 1.

In one embodiment, guide groove formed in the inner side of the joint assembly and has an uneven surface, a first guide hole which extends vertically is formed in the mounting base, and the connecting shaft is located in the guide groove and the first guide hole; and after the joint lock piece is unlocked, the connecting shaft synchronously moves in the guide groove and the first guide hole when the handle set drives the joint assembly to rotate. In this structure, after the joint assembly and the mounting base are released by the joint lock piece, the handle set is rotated to drive the joint assembly to rotate synchronously, at this moment, the connecting shaft in contact with the uneven surface of the guide groove in the joint assembly starts to move upwards, and the linkage mechanism connected with the connecting shaft is driven to move synchronously and drives the second lock mechanism to move to be unlocked; and the structure is simple, and operation is convenient.

The linkage mechanism comprises a first slider, a second slider, a drive member, an elastic mechanism, and a fastening shaft connected with the second lock mechanism; the upper frame comprises an upper frame tube, and the first slider is arranged at the upper end of the upper frame tube; a cavity is formed in the mounting base, and the upper end of the upper frame tube is located in the cavity; a first through hole is formed in the first slider, and the connecting shaft is located in the first through hole; and when the handle set is rotated to drive the joint assembly to rotate, the connecting shaft synchronously moves in the guide groove and the first guide hole; the second slider is arranged at the lower end of the upper frame tube; the drive member is located in the upper frame tube, the upper end of the drive member is fixedly connected with the first slider, and the lower end of the drive member is fixedly connected with the second slider; the lower end of the elastic mechanism is connected with the second slider, and the upper end of the elastic mechanism is connected with the upper frame tube; a second through hole is formed in the second slider, two second guide holes which extend vertically are formed in side walls of the lower end of the upper frame tube, and the fastening shaft is located in the two second guide holes and the second through hole. In this structure, the first slider is driven to move when the connecting shaft moves, the first slider drives the second slider to move through the drive member, then the second slider drives the fastening shaft to move to be separated from the second lock mechanism, and thus, the second lock mechanism is unlocked to transmit a force applied to the handle set.

The second lock mechanism comprises a connecting base fixed to the lower frame, a sliding assembly, a connecting assembly, and a rotary shaft, wherein the sliding assembly is mounted on the lower frame and moves forwards or backwards on the lower frame when stressed, the connecting assembly is connected with the sliding assembly and the upper frame tube, the sliding assembly is connected with each of the two rear wheel sets through a connecting rod, a concave groove and a clamping groove are formed in the connecting base, and the lower end of the lower frame is located in the concave groove and is mounted on the connecting base through the rotary shaft; and when the second lock mechanism is locked, the fastening shaft is located in the clamping groove to be fixed. In this structure, the second lock mechanism is locked through the cooperation of the groove and the fastening shaft, so that the structure is simple, and unlocking is convenient.

Compared to the prior art, the foldable golf cart of the invention has the following advantages: the handle set and the upper frame are connected through the first lock mechanism, the upper frame and the lower frame are connected through the second lock mechanism, and the first lock mechanism and the second lock mechanism are connected through the linkage mechanism; when the first lock mechanism is unlocked, the handle set can rotate, and at this moment, the linkage mechanism drives the second lock mechanism to be unlocked. Thereby, unlocking the second lock mechanism can be easily achieved by operating the handle set. Then the handle set, the upper frame and the lower frame can be folded easily. It is very convenient in use.

### Brief Description of the Drawings

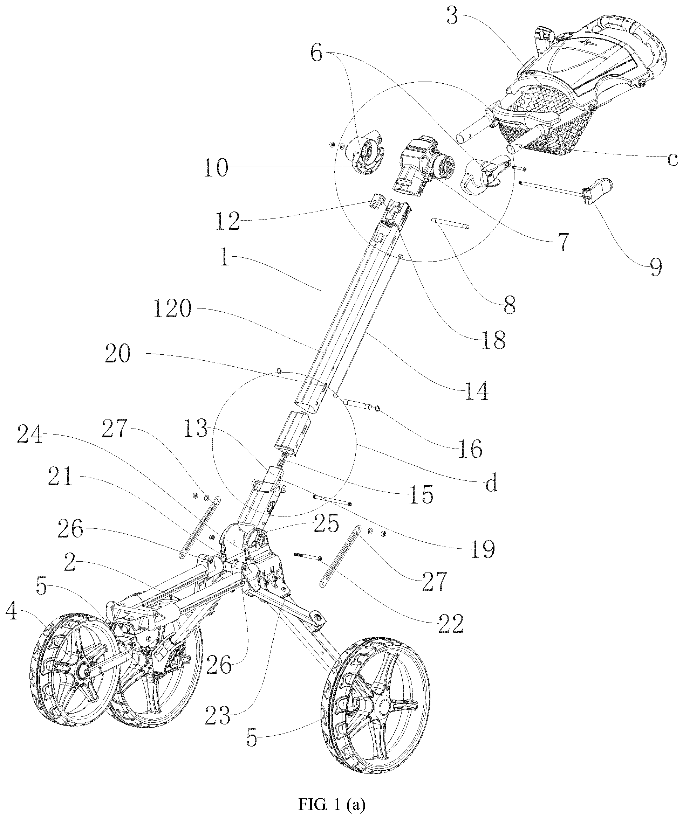

FIG. 1 (a) is an exploded view of a foldable golf cart of the invention;

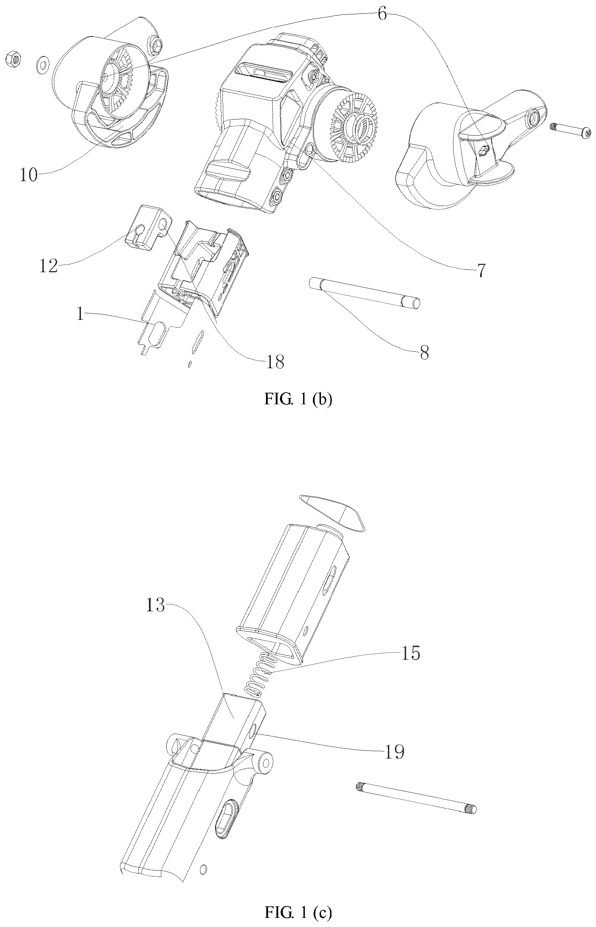

FIG. 1(b) is an enlarged view of part c in FIG. 1(a);
FIG. 1(c) is an enlarged view of part d in FIG. 1(a);

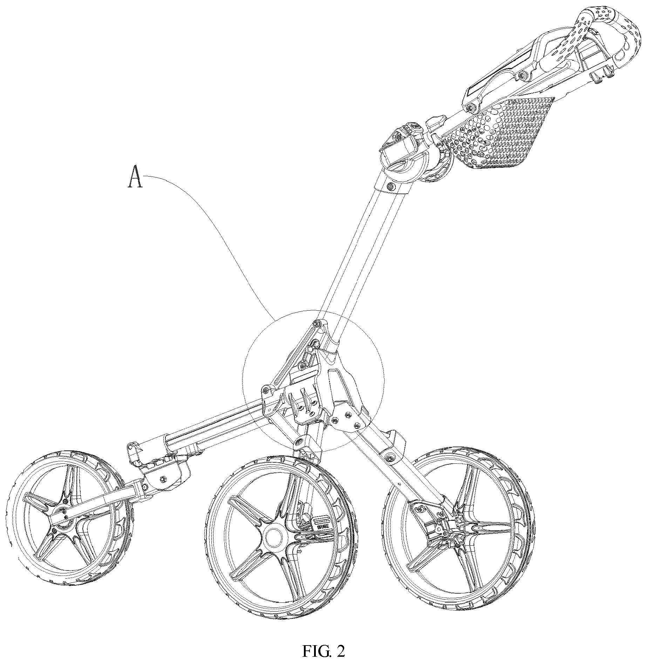

FIG. 2 is a perspective view of the foldable golf cart in an unfolded state of the invention;

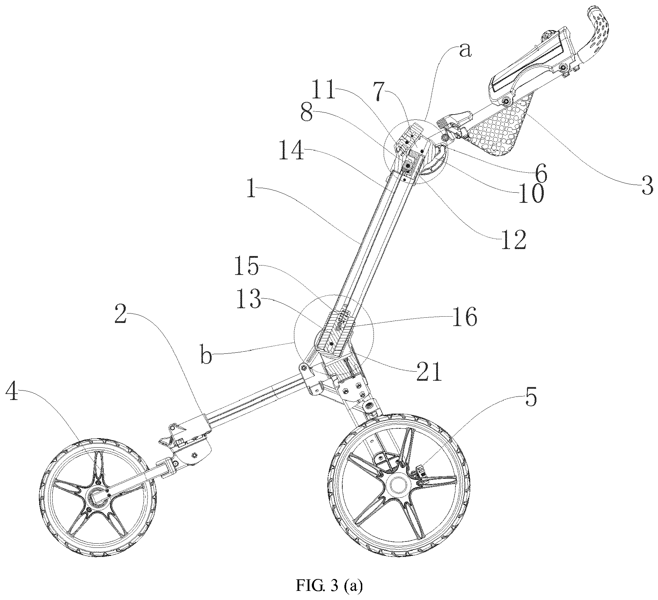

FIG. 3(a) is a partial sectional view of FIG. 2;

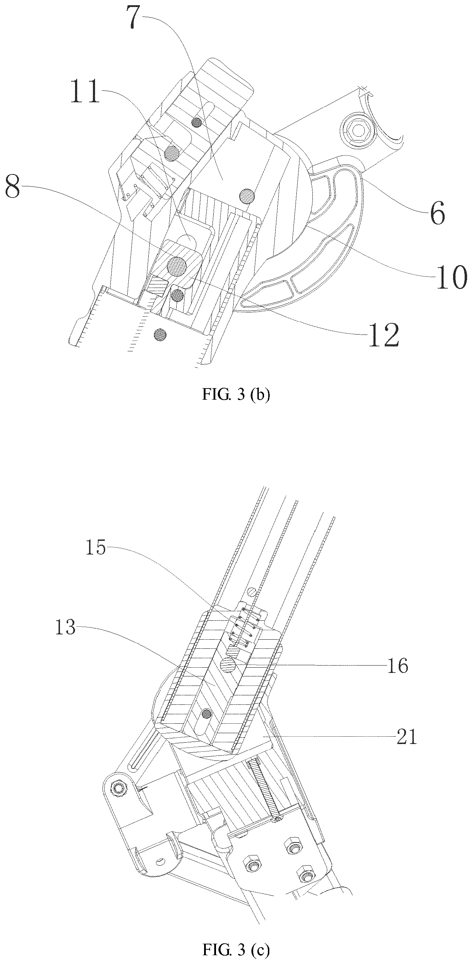

FIG. 3(b) is an enlarged view of part a in FIG. 3(a);
FIG. 3 (c) is an enlarged view of part b in FIG. 3(a);
FIG. 4 is an enlarged view of part A in FIG. 2;

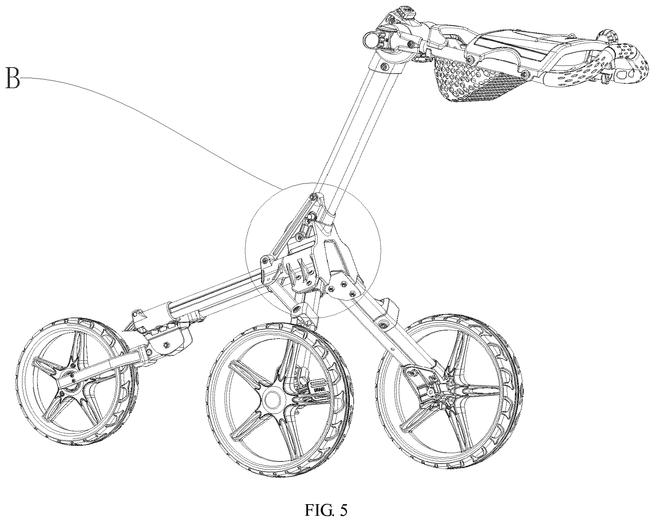

FIG. 5 is a perspective view of the foldable golf cart which is unlocked to be folded according to the invention;

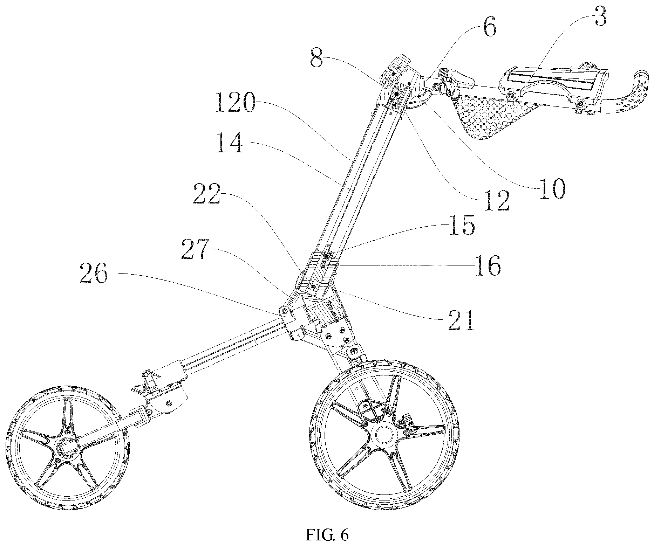

FIG. 6 is a partial sectional view of FIG. 5;
FIG. 7 is an enlarged view of part B in FIG. 5;
FIG. 8 is a schematic diagram of the foldable golf cart in a folded state.

### Detailed Description of the Invention

The invention is further expounded below with reference to the accompanying drawings and embodiments.

Embodiment 1: as shown in the Figures, a foldable golf cart comprises an upper frame 1, a lower frame 2, a handle set 3, a front wheel set 4, and two rear wheel sets 5, wherein the upper frame 1 is mounted on the lower frame 2, the front wheel set 4 is mounted at the front end of the lower frame 2, the two wheel sets 5 are rotatably mounted on the left side and the right side of the rear end of the lower frame 2 respectively, the handle set 3 is connected with the upper frame 1 through a first lock mechanism, the upper frame 1 is connected with the lower frame 2 through a second lock mechanism, the first lock mechanism and the second lock mechanism are connected through a linkage mechanism, and when the first lock mechanism is unlocked, the handle set 3 is able to be rotated. When the handle set is being rotated, the linkage mechanism drives the second lock mechanism to be unlocked.

In this embodiment, the first lock mechanism comprises a joint assembly 6, a mounting base 7, a connecting shaft 8 connected with the linkage mechanism, and a joint lock piece 9 used for locking the joint assembly 6 and the mounting base 7, wherein the joint assembly 6 is fixedly connected with the handle set 3 and is rotatably arranged on the mounting base 7. After the joint lock piece 9 is unlocked, the handle set 3 drives the joint assembly 6 to rotate, which drives the connecting shaft 8 moves synchronously.

Preferably, a guide groove 10 is formed in the inner side of the joint assembly 6, and more preferably the guide groove 10 has an uneven surface. More preferably, a first guide hole 11 which extends vertically is formed in the mounting base 7. The connecting shaft 8 is located in the guide groove 10, and more preferably also in the first guide hole 11; and after the joint lock piece 9 is unlocked, the connecting shaft 8 synchronously moves in the guide groove 10 and more preferably also in the first guide hole 11 when the handle set 3 drives the joint assembly 6 to rotate.

In this embodiment, the linkage mechanism comprises a first slider 12, a second slider 13, a drive member 14, and a fastening shaft 16 connected with the second lock mechanism. Preferably, the upper frame 1 comprises an upper frame tube 120, and the first slider 12 is arranged at the upper end of the upper frame tube 120. Optionally, a cavity is formed in the mounting base 7, and the upper end of the upper frame tube 120 is located in the cavity.

The connecting shaft 8 is fixed to the first slider 12, for example, a first through hole 18 is formed in the first slider 12, and the connecting shaft 8 is located in the first through hole 18. In a preferred embodiment, the handle set 3 rotates and drives the joint assembly 6 to rotate, the connecting shaft 8 synchronously moves, preferably moves in the guide groove 10 and in the first guide hole 11, and drives the first slider 12 to move.

Preferably, the drive member 14 is located in the upper frame tube 120, and the second slider 13 is arranged at the lower end of the upper frame tube 120.

In this embodiment, the upper end of the drive member 14 is fixedly connected with the first slider 12, and the lower end of the drive member 14 is fixedly connected with the second slider 13. A fastening shaft 16 is fixed to the second slider 13, for example, a second through hole 19 is formed in the second slider 13, and the fastening shaft 16 is located in the second through hole 19. Preferably, two second guide holes 20 which extend vertically are formed in side walls of the lower end of the upper frame tube 120, and the fastening shaft 16 is located both in the two second guide holes 20 and in the second through hole 19.

In this embodiment, when the first slider 12 moves, it drives the second slider 13 to move synchronously and then the fastening shaft 16 changes its position.

More preferably, the linkage mechanism further comprises an elastic mechanism 15, the lower end of the elastic mechanism 15 is connected with the second slider 13, and the upper end of the elastic mechanism 15 is connected with the upper frame tube 120.

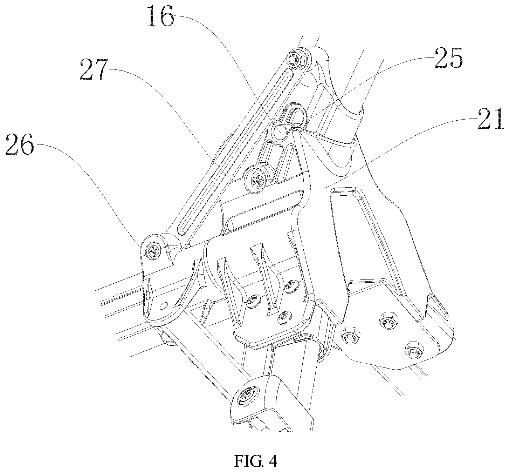

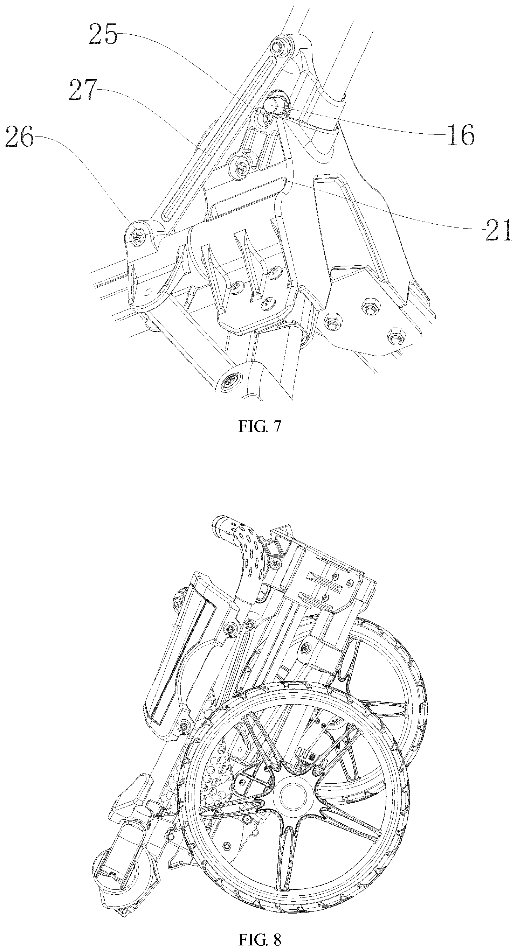

In this embodiment, the second lock mechanism comprises a connecting base 21 fixed to the lower frame 2, and a rotary shaft 22, wherein a concave groove 24 and a clamping groove 25 are formed in the connecting base 21, and a part of the lower frame 2 is located in the concave groove 24 and is mounted on the connecting base 21 through the rotary shaft 22; and when the fastening shaft 16 is located in the clamping groove 25, the second lock mechanism is locked, i.e. the rotation around the rotary shaft 22 is locked, see the Figure 4. When the fastening shaft 16 is moved out of the clamping groove 25, the second lock mechanism is unlocked, i.e. the rotation around the rotary shaft 22 is unlocked, see the Figure 7.

Preferably, the present invention further comprises a sliding assembly 26, a connecting assembly 27, wherein the sliding assembly 26 is mounted on the lower frame 2 and may move forwards or backwards on the lower frame 2 under force, the connecting assembly 27 is connected with the sliding assembly 26 and the upper frame tube 120, the sliding assembly 26 is connected with each of the two rear wheel sets 5 through a connecting rod 23.

Embodiment 2: this embodiment is basically identical with Embodiment 1 and differs from Embodiment 1 in the following aspects: in this embodiment, the sliding assembly comprises two sliders 26, the connecting assembly comprises two connectors 27, and the two sliders 26 are in one-to-one correspondence with the two connectors 27.

## Claims

1. A foldable golf cart, comprising an upper frame (1), a lower frame (2), a handle set (3), at least one front wheel set (4), and at least one rear wheel set (5), wherein the handle set (3) is connected with the upper frame (1) through a first lock mechanism, the upper frame (1) is connected with the lower frame (2) through a second lock mechanism, and the first lock mechanism and the second lock mechanism are connected through a linkage mechanism; and when the first lock mechanism is unlocked, the handle set (3) is able to be rotated, and when the handle set (3) rotates, the linkage mechanism drives the second lock mechanism to be unlocked;
**characterized in that** the first lock mechanism comprises a joint assembly (6), a mounting base (7), a connecting shaft (8) connected with the linkage mechanism, and a joint lock piece (9) used for locking the joint assembly (6); the joint assembly (6) is fixedly connected with the handle set (3) and is rotatably arranged on the mounting base (7).

2. The foldable golf cart according to Claim 1, wherein a guide groove (10) is formed in an inner side of the joint assembly (6), a first guide hole (11) which extends vertically is formed in the mounting base (7), and the connecting shaft (8) is located in the guide groove (10) and the first guide hole (11); and after the joint lock piece (9) is unlocked, the connecting shaft (8) synchronously moves in the guide groove (10) and the first guide hole (11) when the handle set (3) drives the joint assembly (6) to rotate.

3. The foldable golf cart according to Claim 1 or 2, wherein the linkage mechanism comprises a first slider (12), a second slider (13), a drive member (14), and a fastening shaft (16) connected with the second lock mechanism; the connecting shaft (8) is fixed to the first slider (12), for example, a first through hole (18) is formed in the first slider (12) and the connecting shaft (8) is located in the first through hole (18); an upper end of the drive member (14) is fixedly connected with the first slider (12), and a lower end of the drive member (14) is fixedly connected with the second slider (13); a fastening shaft (16) is fixed to the second slider (13), for example, a second through hole (19) is formed in the second slider (13) and the fastening shaft (16) is located in the second through hole (19).

4. The foldable golf cart according to Claim 3, wherein the linkage mechanism further comprises an elastic mechanism (15), wherein a lower end of the elastic mechanism (15) is connected with the second slider (13), and an upper end of the elastic mechanism (15) is connected with the upper frame tube (120).

5. The foldable golf cart according to any of Claims 1 to 4, wherein the second lock mechanism comprises a connecting base (21) fixed to the lower frame (2), and a rotary shaft (22); a concave groove (24) and a clamping groove (25) are formed in the connecting base (21), and a part of the lower frame (2) is located in the concave groove (24) and is mounted on the connecting base (21) through the rotary shaft (22); and when the fastening shaft (16) is located in the clamping groove (25), the second lock mechanism is locked.

6. The foldable golf cart according to Claim 5, further comprising a sliding assembly (26), a connecting assembly (27), wherein the sliding assembly (26) is mounted on the lower frame (2) and is able to move forwards or backwards under force, the connecting assembly (27) is connected with the sliding assembly (26) and the upper frame tube (120), the sliding assembly (26) is connected with each of the rear wheel set (5) through a connecting rod (23).

## Patentansprüche

1. Zusammenklappbarer Golfwagen, umfassend einen oberen Rahmen (1), einen unteren Rahmen (2), einen Griffsatz (3), zumindest einen Vorderradsatz (4) und zumindest einen Hinterradsatz (5), wobei der Griffsatz (3) mit dem oberen Rahmen (1) durch einen ersten Verriegelungsmechanismus verbunden ist, der obere Rahmen (1) mit dem unteren Rahmen (2) durch einen zweiten Verriegelungsmechanismus verbunden ist, und der erste Verriegelungsmechanismus und der zweite Verriegelungsmechanismus durch einen Kopplungsmechanismus verbunden sind; und wenn der erste Verriegelungsmechanismus entriegelt ist, der Griffsatz (3) gedreht werden kann, und wenn sich der Griffsatz (3) dreht, der Kopplungsmechanismus den zweiten Verriegelungsmechanismus antreibt, um entriegelt zu werden;
**dadurch gekennzeichnet, dass** der erste Verriegelungsmechanismus eine Gelenkanordnung (6), eine Montagebasis (7), eine Verbindungswelle (8), die mit dem Kopplungsmechanismus verbunden ist, und ein Gelenkverriegelungsstück (9) umfasst, das zum Verriegeln der Gelenkanordnung (6) verwendet wird; wobei die Gelenkanordnung (6) fest mit dem Griffsatz (3) verbunden ist und drehbar an der Montagebasis (7) angeordnet ist.

2. Zusammenklappbarer Golfwagen nach Anspruch 1, wobei eine Führungsnut (10) in einer Innenseite der Gelenkanordnung (6) gebildet ist, ein erstes Führungsloch (11), das sich vertikal erstreckt, in der Montagebasis (7) gebildet ist, und sich die Verbindungswelle (8) in der Führungsnut (10) und dem ersten Führungsloch (11) befindet; und nachdem das Gelenkverriegelungsstück (9) entriegelt ist, sich die Verbindungswelle (8) synchron in der Führungsnut (10) und dem ersten Führungsloch (11) bewegt, wenn der Griffsatz (3) die Gelenkanordnung (6) antreibt, um sich zu drehen.

3. Zusammenklappbarer Golfwagen nach Anspruch 1 oder 2, wobei der Kopplungsmechanismus einen ersten Schieber (12), einen zweiten Schieber (13), ein Antriebselement (14) und eine Befestigungswelle (16) umfasst, die mit dem zweiten Verriegelungsmechanismus verbunden ist; die Verbindungswelle (8) an dem ersten Schieber (12) befestigt ist, zum Beispiel ein erstes Durchgangsloch (18) in dem ersten Schieber (12) gebildet ist und sich die Verbindungswelle (8) in dem ersten Durchgangsloch (18) befindet; ein oberes Ende des Antriebselements (14) fest mit dem ersten Schieber (12) verbunden ist und ein unteres Ende des Antriebselements (14) fest mit dem zweiten Schieber (13) verbunden ist; eine Befestigungswelle (16) an dem zweiten Schieber (13) befestigt ist, zum Beispiel ein zweites Durchgangsloch (19) in dem zweiten Schieber (13) gebildet ist und sich die Befestigungswelle (16) in dem zweiten Durchgangsloch (19) befindet.

4. Zusammenklappbarer Golfwagen nach Anspruch 3, wobei der Kopplungsmechanismus ferner einen elastischen Mechanismus (15) umfasst, wobei ein unteres Ende des elastischen Mechanismus (15) mit dem zweiten Schieber (13) verbunden ist und ein oberes Ende des elastischen Mechanismus (15) mit dem oberen Rahmenrohr (120) verbunden ist.

5. Zusammenklappbarer Golfwagen nach einem der Ansprüche 1 bis 4, wobei der zweite Verriegelungsmechanismus eine Verbindungsbasis (21), die an dem unteren Rahmen (2) befestigt ist, und eine Drehwelle (22) umfasst; eine konkave Nut (24) und eine Klemmnut (25) in der Verbindungsbasis (21) gebildet sind, und sich ein Teil des unteren Rahmens (2) in der konkaven Nut (24) befindet und an der Verbindungsbasis (21) durch die Drehwelle (22) montiert ist; und wenn sich die Befestigungswelle (16) in der Klemmnut (25) befindet, der zweite Verriegelungsmechanismus verriegelt ist.

6. Zusammenklappbarer Golfwagen nach Anspruch 5, ferner umfassend eine Gleitanordnung (26), eine Verbindungsanordnung (27), wobei die Gleitanordnung (26) an dem unteren Rahmen (2) montiert ist und sich unter Kraft vorwärts oder rückwärts bewegen kann, wobei die Verbindungsanordnung (27) mit der Gleitanordnung (26) und dem oberen Rahmenrohr (120) verbunden ist, wobei die Gleitanordnung (26) mit jedem von dem Hinterradsatz (5) durch eine Verbindungsstange (23) verbunden ist.

## Revendications

1. Chariot de golf pliable, comprenant un cadre supérieur (1), un cadre inférieur (2), un ensemble poignée (3), au moins un ensemble roue avant (4) et au moins un ensemble roue arrière (5), dans lequel l'ensemble poignée (3) est relié au cadre supérieur (1) par un premier mécanisme de verrouillage, le cadre supérieur (1) est relié au cadre inférieur (2) par l'intermédiaire d'un second mécanisme de verrouillage, et le premier mécanisme de verrouillage et le second verrouillage mécanisme sont reliés par un mécanisme de tringlerie ; et lorsque le premier mécanisme de verrouillage est déverrouillé, l'ensemble poignée (3) peut être tourné, et lorsque l'ensemble poignée (3) tourne, le mécanisme de tringlerie entraîne le second mécanisme de verrouillage pour qu'il soit déverrouillé ;
**caractérisé en ce que** le premier mécanisme de verrouillage comprend un assemblage d'articulation (6), une base de montage (7), un arbre de liaison (8) relié au mécanisme de tringlerie, et une pièce de verrouillage d'articulation (9) utilisée pour verrouiller l'assemblage d'articulation (6) ; l'assemblage d'articulation (6) est relié de manière fixe à l'ensemble poignée (3) et est disposé de manière rotative sur la base de montage (7).

2. Chariot de golf pliable selon la revendication 1, dans lequel une rainure de guidage (10) est formée dans un côté intérieur de l'assemblage d'articulation (6), un premier trou de guidage (11) qui s'étend verticalement est formé dans la base de montage (7), et l'arbre de liaison (8) est situé dans la rainure de guidage (10) et le premier trou de guidage (11) ; et après que la pièce de verrouillage d'articulation (9) a été déverrouillée, l'arbre de liaison (8) se déplace de manière synchrone dans la rainure de guidage (10) et le premier trou de guidage (11) lorsque l'ensemble poignées (3) entraîne l'assemblage d'articulation (6) à pivoter.

3. Chariot de golf pliable selon la revendication 1 ou 2, dans lequel le mécanisme de liaison comprend un premier coulisseau (12), un second coulisseau (13), un élément d'entraînement (14) et un arbre de fixation (16) relié au second mécanisme de verrouillage ; l'arbre de liaison (8) est fixé au premier coulisseau (12), par exemple, un premier trou traversant (18) est formé dans le premier coulisseau (12) et l'arbre de liaison (8) est situé dans le premier trou traversant (18) ; une extrémité supérieure de l'élément d'entraînement (14) est reliée de façon fixe au premier coulisseau (12), et une extrémité inférieure de l'élément d'entraînement (14) est reliée de façon fixe au second coulisseau (13) ; un arbre de fixation (16) est fixé au second coulisseau (13), par exemple, un second trou traversant (19) est formé dans le second coulisseau (13) et l'arbre de fixation (16) est situé dans le second trou traversant (19).

4. Chariot de golf pliable selon la revendication 3, dans lequel le mécanisme de liaison comprend en outre un mécanisme élastique (15), dans lequel une extrémité inférieure du mécanisme élastique (15) est reliée au second coulisseau (13), et une extrémité supérieure du mécanisme élastique (15) est relié au tube de cadre supérieur (120).

5. Chariot de golf pliable selon l'une quelconque des revendications 1 à 4, dans lequel le second mécanisme de verrouillage comprend une base de raccordement (21) fixée au cadre inférieur (2) et un arbre rotatif (22) ; une rainure concave (24) et une rainure de serrage (25) sont formées dans la base de raccordement (21), et une partie du cadre inférieur (2) est située dans la rainure concave (24) et est montée sur la base de raccordement (21) à travers l'arbre rotatif (22) ; et lorsque l'arbre de fixation (16) est situé dans la rainure de serrage (25), le second mécanisme de verrouillage est verrouillé.

6. Chariot de golf pliable selon la revendication 5, comprenant en outre un assemblage coulissant (26), un assemblage de raccordement (27), dans lequel l'assemblage coulissant (26) est monté sur le cadre inférieur (2) et est capable de se déplacer vers l'avant ou vers l'arrière sous une force, l'assemblage de raccordement (27) est relié à l'assemblage coulissant (26) et au tube de cadre supérieur (120), l'assemblage coulissant (26) est relié à chacun de l'ensemble roue arrière (5) par l'intermédiaire d'une bielle (23).
